Europäisches Patentamt

European Patent Office

Office européen des brevets

(19)

(11) **EP 0 958 053 B1**

(12) **EUROPÄISCHE PATENTSCHRIFT**

(45) Veröffentlichungstag und Bekanntmachung des Hinweises auf die Patenterteilung:
**05.12.2001 Patentblatt 2001/49**

(21) Anmeldenummer: **98908011.4**

(22) Anmeldetag: **29.01.1998**

(51) Int Cl.$^7$: **B01J 35/00**

(86) Internationale Anmeldenummer:
**PCT/EP98/00476**

(87) Internationale Veröffentlichungsnummer:
**WO 98/34725 (13.08.1998 Gazette 1998/32)**

(54) **VERFAHREN UND VORRICHTUNG ZUR HERSTELLUNG EINES WABENKÖRPERS**

METHOD AND DEVICE FOR PRODUCING A HONEYCOMB BODY

PROCEDE ET DISPOSITIF POUR PRODUIRE UN CORPS ALVEOLE

(84) Benannte Vertragsstaaten:
**DE FR GB IT**

(30) Priorität: **06.02.1997 DE 19704521**

(43) Veröffentlichungstag der Anmeldung:
**24.11.1999 Patentblatt 1999/47**

(73) Patentinhaber: **Emitec Gesellschaft für Emissionstechnologie mbH**
**53797 Lohmar (DE)**

(72) Erfinder:
 • **BRÜCK, Rolf**
  **D-51429 Bergisch Gladbach (DE)**
 • **DIEWALD, Robert**
  **D-53721 Siegburg (DE)**

(74) Vertreter: **Kahlhöfer, Hermann, Dipl.-Phys. et al**
**Patentanwälte**
**Kahlhöfer Neumann Heilein**
**Postfach 10 33 63**
**40024 Düsseldorf (DE)**

(56) Entgegenhaltungen:

| | |
|---|---|
| WO-A-90/03220 | WO-A-94/01661 |
| DE-A- 1 952 168 | DE-A- 1 952 232 |
| US-A- 3 849 076 | US-A- 4 719 680 |
| US-A- 4 847 230 | US-A- 4 923 109 |
| US-A- 5 382 774 | US-A- 5 446 006 |
| US-A- 5 464 679 | US-A- 5 468 455 |
| US-A- 5 474 746 | US-A- 5 525 309 |
| US-A- 5 608 968 | |

## Beschreibung

Die vorliegende Erfindung bezieht sich auf ein Verfahren zur Herstellung eines Wabenkörpers, insbesondere eines Katalysator-Trägerkörpers, aus wenigstens einem Stapel aus einer Vielzahl von zumindest teilweise strukturierten Blechen sowie auf eine Vorrichtung zur Herstellung eines solchen Wabenkörpers.

Trägerkörper für Katalysatoren, durch die eine Verringerung der Schadstoffmenge in Abgasen, insbesondere in Abgasen einer Arbeitskraftmaschine geschaffen wird, können in der Form eines metallischen Wabenkörpers ausgebildet sein. Solche Wabenkörper umfassen einen Stapel aus einer Vielzahl von zumindest teilweise strukturierten Blechen. Die US-A 4,923,109 beschreibt einen Wabenkörper, der einen gegensinnig um sich selbst und um einen Zentralbereich verschlungenen Stapel aus wenigstens teilweise strukturierten Blechen aufweist.

Durch die DE 195 21 685 ist ein Verfahren zur Herstellung eines solchen Wabenkörpers bekannt. Nach dem Verfahren wird vorgeschlagen, daß zunächst ein Stapel aus einer Mehrzahl von zumindest teilweise strukturierten Blechlagen geschichtet wird, der danach in eine offene, aus der Außenform des herzustellenden Wabenkörpers entsprechenden Formsegmenten gebildete Form eingebracht und dieser von einer Verschlingungseinrichtung in einem Zentralbereich gehalten wird. Danach wird der Stapel mit einem Drehsinn umschlungen und die Form durch Verschwenken der Formsegmente gegen den Drehsinn der Umschlingungseinrichtung geschlossen, wenn ein vorgegebener Umschlingungsgrad erreicht ist.

Durch die DE 195 22 327 ist ein Verfahren zum Herstellen eines Wabenkörpers mit einer Vielzahl von für ein Fluid durchlässigen Kanälen aus einer Vielzahl von zumindest teilweise strukturierten Blechlagen bekannt. Dieses Verfahren eignet sich besonders zur Herstellung eines Wabenkörpers, wie er durch die WO 90/03220 bekannt ist. Ein solcher Wabenkörper weist mindestens drei Stapel von Blechen auf, wobei wenigstens drei der Stapel um je eine zugehörige Knicklinie im Zentralbereich des Wabenkörpers gefaltet und im gefalteten Zustand gleichsinnig umeinander und um den Zentralbereich mit den Knicklinien verschlungen sind. Die Herstellung eines solchen Wabenkörpers erfolgt nach der DE 195 22 327 A1 dadurch, daß jeder Stapel um je eine Knicklinie gefaltet wird. Die so gefalteten Stapel werden in eine Form eingebracht. Jeder Stapel wird durch eine Verschlingungseinrichtung in einem zentralen Bereich gehalten. Die Verschlingungseinrichtung weist Wickeldorne auf, die im Bereich jeder Knicklinie in den geknickten Stapel eingreifen. Durch Drehen der Wickeldorne um eine zentrale Achse werden die einzelnen Stapel gleichsinnig verschlungen.

Aus der WO 94/01661 ist ein Wabenkörper bekannt, der aus nur einer geringen Anzahl von Blechen aufgebaut ist und dessen Aufbau sich dazu eignet, zumindest einen länglichen elektrischen Leiter in zumindest eine der Blechlagen zu integrieren oder eine der Blechlagen selbst als länglichen isolierten elektrischen Leiter auszubilden. Zur Herstellung eines solchen metallischen Wabenkörpers aus zumindest teilweise strukturierten Blechlagen wird durch die WO 94/01661 vorgeschlagen, daß aus einer geringen Anzahl von zumindest teilweise strukturierten Blechstreifen ein Hohlkegel hergestellt wird. Dieser Hohlkegel bzw. Kreisring wird an mindestens drei Linien von außen nach innen verformt, so daß sich entsprechend viele Umkehrlinien sowohl in einem äußeren Ringbereich wie auch in einem inneren Ringbereich bilden. Die entstehende sternähnliche bzw. rosettenähnliche, Schlaufen aufweisende Struktur wird durch gleichsinniges drehendes Verschlingen der sich zwischen den inneren Umkehrlinien und den äußeren Umkehrlinien erstreckenden Schlaufen um die inneren Umkehrlinien verschlungen.

Es ist festgestellt worden, daß in der Makrostruktur des fertig hergestellten Wabenkörpers bereichsweise Defekte auftreten, die die Qualität des Wabenkörpers beeinträchtigen. Solche Defekte treten, bei einer aufeinanderfolgenden Herstellung einer Vielzahl von Wabenkörpern, die mit gleichen Vorrichtungen hergestellt werden, unregelmäßig auf. Dies führt zu besonderen Maßnahmen im Bereich der Qualitätsicherung bei den hergestellten Wabenkörpern.

Hiervon ausgehend liegt der vorliegenden Erfindung die Aufgabe zugrunde ein Verfahren anzugeben, durch welches die Qualität des hergestellten Wabenkörpers verbessert wird. Ein weiteres Ziel der Erfindung ist es, ein Verfahren zur Herstellung einer Mehrzahl von Wabenkörpern anzugeben, durch welches die Qualitätssicherung vereinfacht werden kann. Ein weiteres Ziel der Erfindung ist es eine Vorrichtung zur Herstellung eines Wabenkörpers anzugeben, mittels derer qualitativ verbesserte Wabenkörper herstellbar sind.

Zur Lösung wird erfindungsgemäß ein Verfahren zur Herstellung eines Wabenkörpers mit einer Vielzahl von für ein Fluid durchlässigen Kanälen aus einer Vielzahl von zumindest teilweise strukturierten Blechen vorgeschlagen, bei dem wenigstens ein Stapel aus einer Mehrzahl von zumindest teilweise strukturierten Blechen geschichtet wird. Dieser Stapel wird in eine Form eingebracht und in dieser von einer um eine Achse verdrehbare Umschlingungsvorrichtung in dem Zentralbereich des Stapels gehalten. Die Umschlingungsvorrichtung weist wenigstens zwei Wickeldorne auf, die im wesentlichen parallel zur Wickelachse verlaufen und sich in Längsrichtung der Kanäle erstrecken und in dem Zentralbereich des Stapels jeweils an einer Außenfläche angreifen. Der in die Form eingebrachte Stapel wird anschließend einem Umschlingungsvorgang unterzogen, bis der Stapel einen vorgegebenen Umschlingungsgrad erreicht hat, wobei wenigstens während des Umschlingungsvorgangs ein in einem Zentralbereich ausgebildeter Aufbau mit relativ zueinander liegenden Strukturen der Bleche erhalten bleibt. Durch diese Ausgestaltung des Verfahrens wird sichergestellt, daß in einem Zentralbereich des Stapels keine Relativbewegung der Strukturen eintritt, wodurch qualitativ gleichbleibende Wabenkörper herstellbar sind. Die Beibehaltung des Aufbaus mit relativ zueinander liegenden Strukturen der Bleche im Zentralbereich des Stapels erfolgt vorzugsweise seit der Ausbildung des Aufbaus im Zentralbereich. Bei Wabenkörpern, wie sie beispielsweise durch die DE 195 21 685 A1 bekannt sind, wird der Aufbau vorzugsweise mit der Beendigung der Schichtung der Bleche für die weiteren Verfahrensschritte beibehalten. Bei Wabenkörpern, bei denen der Stapel um eine Knicklinie geknickt wird, wird als Aufbau die Makrostruktur des Stapels im Zentralbereich, d.h. im Bereich der Knicklinie betrachtet.

Vorzugsweise wird der Aufbau im Zentralbereich eines Stapels vorgegeben. Es ist auch möglich, aufgrund empirischer Untersuchungen einen Aufbau im Zentralbereich eines Stapels zu ermitteln, der zur qualitativ besonders günstigen Wabenkörpern führt.

Vorstehend wurde bereits ausgeführt, daß Wabenkörper in ihrer Makrostruktur Defekte aufweisen können. Bei diesen Defekten handelt es sich um Deformationen von Kanalwänden, die durch die zumindest teilweise strukturierten Bleche gebildet werden. Solche Deformationen grenzen insbesondere an Bereiche an, in denen der Wabenkörper eine relativ steife Struktur aufweist. Zur Vermeidung von Deformationen der Kanalwände im Bereich solcher steifen Strukturen wird vorgeschlagen, daß ein Stapel aus abwechselnd strukturierten Blechen, die Wellenberge und Wellentäler aufweisen, mit glatten Blechen geschichtet wird, wobei die Schichtung des Stapels so erfolgt, daß ein Wellenberg eines strukturierten Blechs im wesentlichen zwischen zwei Wellentälern eines benachbarten strukturierten Blechs liegt. Ein solcher Stapel weist eine relativ geringe Steifigkeit auf. Durch die Umschlingung des Stapels bzw. der Stapel findet eine Relativverschiebung der Strukturen benachbarter Bleche statt. Hierdurch entstehen im Querschnitt des Wabenkörpers Bereiche, die eine höhere Steifigkeit haben können als der Zentralbereich. Diese steiferen Bereiche sind jedoch nicht so ausgeprägt bzw. so steif, daß in benachbarten Gebieten dieser Bereiche es zu Deformationen der Strukturen, die die Kanalwände bilden kommt. Die Ausbildung eines Stapels mit einem relativ weichen Zentralbereich ist insbesondere zur Herstellung von Wabenkörpern mit einem geringen Durchmesser bzw. einem kleinen Umschlingungsgrad geeignet.

Zur Vermeidung von relativ steifen Bereichen im Querschnitt des Wabenkörpers ist es ausreichend, wenn der Aufbau im Zentralbereich eines Stapels relativ weich ist. Es ist auch möglich einen Stapel so auszubilden, daß die Steifigkeit des Stapels quer zur Längsrichtung der Strukturen überall gleich ist. Hierzu wird vorgeschlagen, daß die strukturierten Bleche eine sich mit einer konstanten Wellenlänge wiederholende Wellenberge und Wellentäler aufweisen. Bei einer solchen Ausgestaltung der Strukturbleche wird vorgeschlagen, daß die Bleche vor der Stapelung von einem Blechband abgetrennt werden, wobei die Bleche eine Länge aufweisen, die einem ganzzahligen Vielfachen der Wellenlänge entspricht. Durch diese Ablängung der Bleche wird erreicht, daß bei einer Schichtung der strukturierten Bleche ein Wellenberg eines strukturierten Blechs im wesentlichen zwischen zwei Wellentälern eines benachbarten strukturierten Blechs liegt.

Alternativ zu einem Stapel, der einen Aufbau im Zentralbereich aufweist, der eine geringe Steifigkeit hat, wird vorgeschlagen, daß der Aufbau im Zentralbereich des Stapels eine relativ hohe Steifigkeit aufweist. Dem Aufbau im Zentralbereich des Stapels wird eine relativ hohe Steifigkeit dadurch verliehen, daß die strukturierten Bleche mit Wellenbergen und Wellentälern und die glatten Bleche abwechselnd so geschichtet werden, daß Wellenberge und Wellentäler benachbarter strukturierter Bleche im wesentlichen quer zur Längsstreckung der Wellenberge bzw. Wellentäler übereinander fluchten. Sind die strukturierten Bleche so ausgestaltet, daß die Wellenberge und Wellentäler mit einer sich wiederholenden Wellenlänge ausgebildet sind, so wird durch die Schichtung ein Stapel hergestellt, der eine relativ hohe Steifigkeit aufweist. Durch die Umschlingung des Stapels findet eine relative Verschiebung der Wellenberge und Wellentäler der benachbarten Bleche statt. Dadurch liegen die Wellenberge nicht mehr fluchtend zu den Wellentälern benachbarter Bleche, wodurch dem fertig hergestellten Wabenkörper außerhalb des Zentralbereichs eine Struktur verliehen wird, die in radialer Richtung gesehen eine geringere Steifigkeit aufweist als der Zentralbereich. Der Zentralbereich des fertig hergestellten Wabenkörpers kann als ein relativ harter Kern und der Bereich außerhalb des Kerns als eine relativ weiche Schale angesehen werden. Auch durch diese Ausgestaltung des Verfahrens wird ein Wabenkörper hergestellt, bei dem die Ausbildung ausgeprägter Bereiche mit einer hohen Festigkeit in der Schale vermieden wird.

Werden zur Ausbildung des Wabenkörpers strukturierte Bleche, die sich mit einer Wellenlänge $\lambda$ wiederholende Wellenberge und Wellentäler aufweisen, so wird vorgeschlagen, daß die Bleche vor der Stapelung von einem Blechband mit einer Länge entsprechend der Beziehung $L = n \lambda + 0.5 \lambda$ abgetrennt werden, wobei n ein Element aus der Menge der natürlichen Zahlen ist. Hierdurch wird sichergestellt, daß bei der Stapelung der strukturierten Bleche Wellenberge und Wellentäler benachbarter strukturierter Bleche im wesentlichen miteinander fluchten.

Bei der Herstellung eines Wabenkörpers ist die Länge der strukturierten Bleche nicht immer frei wählbar, da der fertige Wabenkörper als Katalysator-Trägerkörper bestimmte geometrische Eigenschaften, z.B. eine bestimmte Anzahl von Kanälen im Querschnitt aufweisen muß. Zur Ausbildung eines definierten Aufbaus im Zentralbereich des Stapels wird daher vorgeschlagen, daß nach einer Schichtung eines Stapels in die Kanäle im Zentralbereich Positionierelemente eingeführt werden. Durch eine entsprechende Ausgestaltung und Anordnung der Positionierelemente zueinander kann ein Aufbau im Zentralbereich des Stapels erreicht werden, der eine relativ geringe oder eine relativ hohe Steifigkeit aufweist. Es ist auch möglich geeignete Steifigkeiten des Stapels im Zentralbereich zu erreichen, wobei die Positionierelemente entsprechend an den geforderten Aufbau des Zentralbereichs angepaßt werden.

Nach einem anderen erfinderischen Gedanken wird ein Verfahren zur Herstellung von Wabenkörpern vorgeschlagen, wobei jeder Wabenkörper eine Vielzahl von für ein Fluid durchlässigen Kanälen aus einer Vielzahl von zumindest teilweise strukturierten Blechen aufweist, durch welches qualitativ verbesserte Wabenkörper herstellbar ist.

Nach diesem Verfahren zur Herstellung von Wabenkörpern wird vorgeschlagen, daß wenigstens ein Stapel aus einer Mehrzahl von zumindest teilweise strukturierten Blechen geschichtet wird. Der geschichtete Stapel wird in eine Form eingebracht und in dieser von einer um eine Achse verdrehbare Umschlingungsvorrichtung in dem Zentralbereich des Stapels gehalten. Der Stapel wird einem Umschlingungsvorgang unterzogen bis ein vorgegebener Umschlingungsgrad des Stapels erreicht ist. Der so umschlungene Stapel wird, gegebenenfalls nach einer Fixierung, beispielsweise durch ein Mantelrohr, aus der Form entnommen. Diese Verfahrensschritte werden für jeden Stapel eines weiteren Wabenkörpers wiederholt. Jeder Stapel wird mit in einem Zentralbereich stets gleichem Aufbau gebildet. Der Aufbau weist relativ zueinander angeordnete Strukturen der Bleche auf. Dieser Aufbau wird wenigstens während des Umschlingungsvorgangs eines jeden Stapels erhalten. Dadurch, daß der Aufbau der relativ zueiander angeordneten Strukturen der Bleche im Zentralbereich des Stapels bei einem jeden Wabenkörper gleich ist, wird sichergestellt, daß die Verteilung der Kanäle über den Querschnitt des Wabenkörpers bei mehreren Wabenkörpern nahezu gleich ist. Vorzugsweise wird der Aufbau im Zentralbereich eines Stapels für einen ersten Wabenkörper von mehreren Wabenkörpern vorgegeben. Der vorgegebene Aufbau im Zentralbereich ist vorzugsweise so gewählt, daß innerhalb des Querschnitts des Wabenkörpers keine ausgeprägten Bereiche mit großer Steifigkeit entstehen, in deren Nähe sich deformierte Strukturen ausbilden.

Eine weitere Entwicklung des erfindungsgemäßen Verfahrens besteht darin, daß ein Stapel für einen ersten Wabenkörper von mehreren Wabenkörpern geschichtet und der Aufbau im Zentralbereich des Stapels für den ersten Wabenkörper bestimmt wird. Dieser Aufbau des ersten Stapels im Zentralbereich wird durch entsprechende Schichtung von Blechen zu Stapeln für jeden weiteren Wabenkörper wiederholt, wenn der aus dem ersten Stapel hergestellte Wabenkörper vorgegebene Qualitätskriterien erfüllt.

Nach einem weiteren erfindungsgemäßen Gedanken wird eine Vorrichtung zur Herstellung wenigstens eines Wabenkörpers, insbesondere eines Katalysator-Trägerkörpers, aus wenigstens einem Stapel aus einer Vielzahl von zumindest teilweise strukturierten Blechen, die eine Vielzahl von für ein Fluid durchströmbaren Kanälen bilden, vorgeschlagen. Die Vorrichtung umfaßt eine Form, deren Innengestalt im wesentlichen eine Außenform eines herzustellenden Wabenkörpers entspricht. Desweiteren ist eine Umschlingungsvorrichtung vorgesehen, durch die ein jeder Stapel in seinem Zentralbereich wenigstens während eines Umschlingungsvorgangs gehaltert wird. Die Umschlingungseinrichtung weist eine Halteeinrichtung auf, durch die jeder Stapel im Zentralbereich des Stapels so gehalten wird, daß wenigstens während des Umschlingungsvorgangs ein in einem Zentralbereich ausgebildeter Aufbau mit relativ zueinander liegenden Strukturen der Bleche erhalten bleibt.

Vorteilhafterweise weist die Halteeinrichtung Positionierelemente auf, die wenigstens teilweise in die Kanäle des Aufbaus in einem Zentralbereich eines jeden Stapels einführbar sind. Die Gestalt der Positionierelemente entspricht im wesentlichen der Form der Kanäle. Vorzugsweise sind die Positionierelemente dornartig ausgebildet. Die Breite der Halteeinrichtung ist. vorzugsweise so bemessen, daß diese der Dicke eines Stapels entspricht.

Weitere Einzelheiten der Verfahren sowie der Vorrichtung werden anhand der in der Zeichnung dargestellten Ausführungsbeispiele erläutert. Es zeigen:

Fig. 1    schematisch einen Bildungsvorgang eines ersten Ausführungsbeispiels eines Stapels,

Fig. 2    schematisch einen Bildungsvorgang eines zweiten Ausführungsbeispiels eines Stapels,

Fig. 3    schematisch in der Draufsicht ein Ausführungsbeispiel einer Vorrichtung mit einem Stapel,

Fig. 4    ein erstes Ausführungsbeispiel einer Umschlingungsvorrichtung,

Fig. 5    ein zweites Ausführungsbeispiel einer Umschlingungsvorrichtung,

Fig. 6    eine Schnittansicht der Umschlingungsvorrichtung nach Fig. 5.

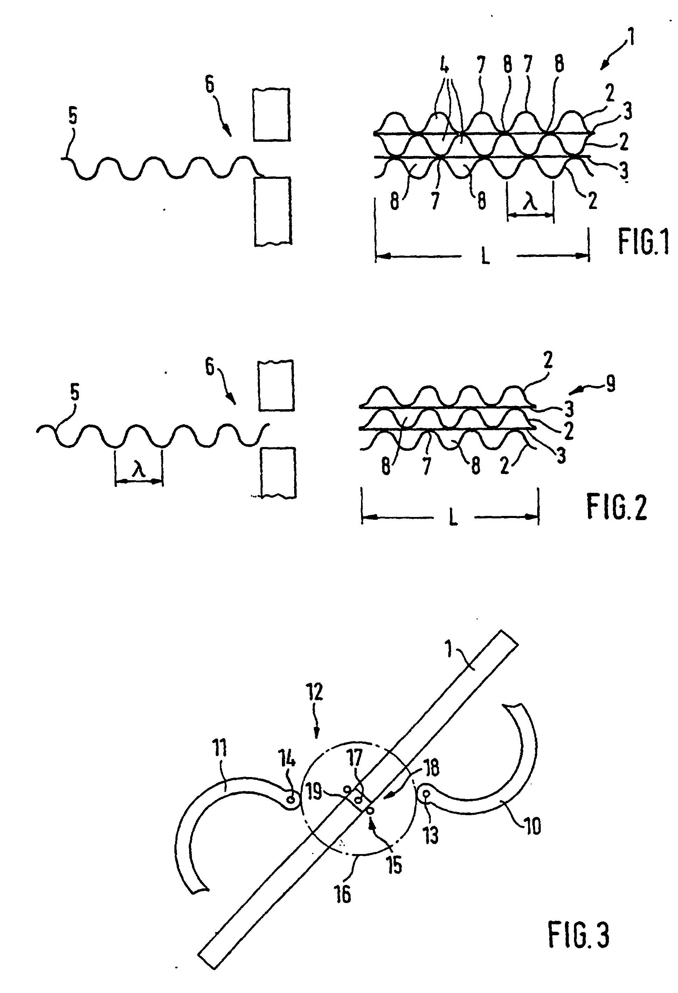

In der Fig. 1 ist ein Bildungsvorgang eines Stapels 1 dargestellt. Der Stapel 1 umfaßt eine Mehrzahl aus zumindest teilweise strukturierten Blechen 2. Zwischen den übereinander geschichteten strukturierten Blechen 2 sind glatte Bleche 3 angeordnet. Durch die strukturierten Bleche 2 sowie die glatten Bleche 3 werden im Stapel 1 Kanäle 4 gebildet. Die einzelnen strukturierten Bleche 2 sind von einem Blechband 5 auf eine entsprechende Länge durch eine Schneidvorrichtung 6 abgeschnitten.

Die strukturierten Bleche 2 weisen Wellenberge 7 und Wellentäler 8 auf. Die strukturierten Bleche 2 sind so abwechselnd geschichtet, daß Wellenberge 7 und Wellentäler 8 benachbarter strukturierter Bleche 2 im wesentlichen miteinander fluchten.

Die strukturierten Bleche 2 weisen eine sich mit einer Wellenlänge $\lambda$ wiederholende Wellenberge 7 und Wellentäler 8 auf. Die Bleche 2 sind vor der Stapelung von einem Blechband 5 mit einer Länge L entsprechend der Beziehung L = n $\lambda$ + 0.5 $\lambda$ abgetrennt worden, wobei n ein Element aus der Menge der natürlichen Zahlen ist. Durch diese Ausgestaltung und Anordnung des Stapels weist dieser eine relativ große Steifigkeit auf.

Eine weitere mögliche Schichtung von strukturierten Blechen 2 und glatten Blechen 3 zeigt die Fig. 2. Der Stapel 9 nach Fig. 2 weist eine Anordnung von strukturierten Blechen 2 und glatten Blechen 3 auf, bei der die Wellenberge 7 eines strukturierten Blechs 2 zwischen zwei Wellentälern 8 eines benachbarten strukturierten Blechs 2. Die strukturierten Bleche 2 weisen eine sich mit einer Wellenlänge $\lambda$ wiederholende Wellenberg- und Wellentalstruktur auf. Die strukturierten Bleche 2 sind vor der Stapelung von einem Blechband 5 mit einer Länge L abgetrennt worden, die einem ganzzahligen Vielfachen der Wellenlänge $\lambda$ entspricht.

Der Stapel 9 weist eine gegenüber dem Stapel 1 geringere Steifigkeit auf, da die Wellenberge 7 eines strukturierten Blechs 2 so positioniert sind, daß diese stets zwischen zwei Wellentälern 8 eines benachbarten strukturierten Blechs 2 liegen.

Durch die Fig. 3 ist eine Vorrichtung zum Herstellung eines Wabenkörpers dargestellt. Hierbei handelt es sich um eine beispielhafte Darstellung einer Vorrichtung zur Herstellung eines Wabenkörpers. Eine solche Vorrichtung ist durch die DE 195 21 685 A1 bekannt. Die Vorrichtung weist eine aus zwei Formsegmenten 10, 11 bestehende Form 12 auf. Jedes Formsegment 10, 11. ist um jeweils eine Schwenkachse 13, 14 verschwenkbar. Im verschwenkten Zustand der Formsegmente 10, 11 umfassen die Formsegmente einen durch eine Umschlingungseinrichtung 15 gebildeten Wabenkörper. Die Umhüllende des Wabenkörpers ist mit dem Bezugszeichen 16 gekennzeichnet.

Die Umschlingungseinrichtung 15 ist um eine zentrale Achse 17 verschwenkbar. Die Umschlingungseinrichtung 15 hält den Stapel 1 in einem zentralen Bereich 18 zusammen.

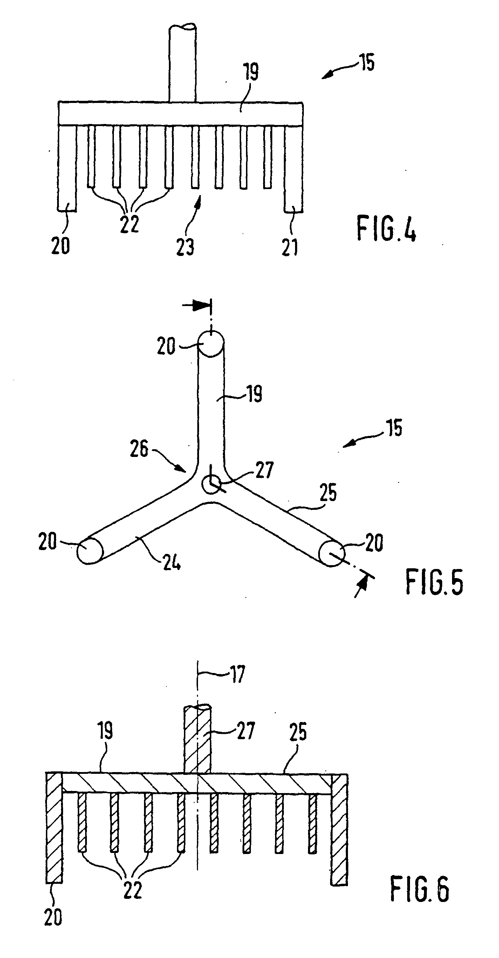

In der Fig. 4 ist die Umschlingungsvorrichtung 15 schematisch dargestellt. Die Umschlingungseinrichtung 15 weist einen Träger 19 auf. An dem jeweiligen Ende des Trägers 19 ist ein Wickeldorn 20 bzw. 21 angeordnet, die jeweils an einer Außenfläche des Stapels 1 angreifen. Zwischen den Wickeldornen 20, 21 sind Positionierelemente 22 vorgesehen, die im wesentlichen parallel zu den Wickeldornen 20, 21 verlaufen. Die Positionierelemente 22 sind im wesentlichen stabförmig ausgebildet. Sie greifen wenigstens teilweise in die Kanäle 4 des Stapels 1, wodurch der Aufbau des Stapels im Zentralbereich 18 erhalten bleibt. Die Umschlingungsvorrichtung 15 kann mehrere Reihen von Positionierelementen 22 aufweisen. Diese können auch versetzt zueinander angeordnet sein. Die Anordnung der Positionierelemente 22 richtet sich im wesentlichen nach dem gewünschten Aufbau im Zentralbereich 18 eines Stapels. Die Positionierelemente 22 und der Träger 19 bilden hierbei eine Halteeinrichtung 23, durch die jeder Stapel im Zentralbereich 18 des Stapels 1 so gehalten wird, daß wenigstens während des Umschlingungsvorganges ein im Zentralbereich 18 ausgebildeter Aufbau mit relativ zueinander liegenden Strukturen der, insbesondere Wellenberge 7 und Wellentäler 8, der strukturierten Bleche 2 erhalten bleibt.

In der Fig. 5 und 6 ist ein weiteres Ausführungsbeispiel einer Umschlingungsvorrichtung 15 dargestellt. Die Umschlingungsvorrichtung 15 ist insbesondere zur Herstellung eines Wabenkörpers mit einer Vielzahl von für ein Fluid durchlässigen Kanälen aus einer Vielzahl von zumindest teilweise strukturierten Blechen, bei dem eine Mehrzahl von Stapeln aus einer Mehrzahl von zumindest teilweise strukturierten Blechen 2 geschichtet wird, wobei jeder Stapel um je eine Knicklinie gefaltet wird. Die Stapel in eine offene, aus der Außenform des herzustellenden Wabenkörpers entsprechenden Formsegmenten gebildete Form eingebracht und in dieser von der Umschlingungsvorrichtung 15 gehalten wird. Die Stapel, welche nicht dargestellt sind, werden in einem Drehsinn umeinander geschlungen. Die Herstellung eines solchen Wabenkörpers ist beispielsweise in der DE 195 22 327 A1 und der DE 195 21 685 A1 beschrieben. Der Inhalt dieser Druckschriften gilt als Inhalt dieser Patentanmeldung.

Die Umschlingungsvorrichtung 15, wie sie in der Fig. 5 dargestellt ist, weist drei Träger 19, 24, 25 auf, die sich von einem gemeinsamen Zentrum 26 weg erstrecken. Im Zentrum 26 ist eine Antriebswelle 27 vorgesehen, durch die die Umschlingungsvorrichtung 15 um die Achse 17 verschwenkbar ist. Jeder Träger 19, 24, 25 ist gleich ausgebildet. Zwischen einem jeden Träger 19, 24, 25 ist ein Winkel von ca. 120° gebildet. An den freien Enden der Träger 19, 24, 25 sind jeweils Wikkeldorne 20 vorgesehen, die mit dem oder den Stapeln in Eingriff bringbar sind. Die Wickeldorne 20 greifen im wesentlichen in dem Bereich der Knicklinie eines Stapels ein. Durch Drehen der Wickeldorne 20 um die Achse 17 in eine Richtung werden die einzelnen Stapel, die nicht dargestellt sind, gleichsinnig verschlungen. Um sicherzustellen, daß wenigstens während des Umschlingungsvorgangs der Aufbau der Stapel im Zentralbereich erhalten bleibt, weist jeder Träger 19, 24, 25 Positionierelemente 22 auf, die wenigstens teilweise in Kanäle 4 eines jeden Stapels einführbar sind. Es ist nicht zwingend, daß die Anordnung der Positionierelemente 22 an jedem Träger 19, 24, 25 der Halteeinrichtung 23 gleich sein muß. Es können auch unterschiedliche Anordnungen der Positionierelemente 22 vorgesehen sein.

**Bezugszeichenliste**

1          Stapel
2          strukturiertes Blech
3          glattes Blech
4          Kanal
5          Blechband
6          Schneidevorrichtung
7          Wellenberg
8          Wellental
9          Stapel
10, 11     Formsegment
12         Form
13, 14     Schwenkachse
15         Umschlingungsvorrichtung
16         Umhüllende
17         Achse
18         Zentralbereich
19         Träger
20, 21     Wickeldorn
22         Positionierelement
23         Halteeinrichtung
24, 25     Träger
26         Zentrum

**Patentansprüche**

1.  Verfahren zur Herstellung eines Wabenkörpers mit einer Vielzahl von für ein Fluid durchlässigen Kanälen (4) aus einer Vielzahl von zumindest teilweise strukturierten Blechen (2), bei dem

    a) wenigstens ein Stapel (1) aus einer Mehrzahl von zumindest teilweise strukturierten Blechen (2) so geschichtet wird, daß die Kanäle (4) gebildet werden,
    b) der Stapel (1, 9) in eine Form (12) eingebracht und in dieser von einer Umschlingungsvorrichtung (15), die um eine zentrale Achse (17) verschwenkbar ist und die wenigstens zwei Wikkeldorne (20, 21) aufweist, die im wesentlichen parallel zur Wikkelachse (17) verlaufen und sich in Längsrichtung der Kanäle (4) erstrecken und in einem Zentralbereich (18) des Stapels (1) jeweils an einer Außenfläche angreifen sowie mit Positionierelementen (22), die wenigstens teilweise in Kanäle (4) eingreifen, in dem Zentralbereich (18) des Stapels (1, 9) gehalten wird,
    c) der Stapel (1, 9) einem Umschlingungsvorgang unterzogen wird bis ein vorgegebener Umschlingungsgrad des Stapels (1, 9) erreicht ist, und wenigstens während des Umschlingungsvorgangs ein in einem Zentralbereich (18) ausgebildeter Aufbau mit relativ zueinander liegenden Strukturen (7, 8) der Bleche (2) erhalten bleibt.

2.  Verfahren zur Herstellung von Wabenkörpern, wobei jeder Wabenkörper eine Vielzahl von für ein Fluid durchlässigen Kanälen aus einer Vielzahl von zumindest teilweise strukturierten Blechen (2) aufweist, bei dem

    a) wenigstens ein Stapel (1, 9) aus einer Mehrzahl von zumindest teilweise strukturierten Blechen (2) so geschichtet wird, daß die Kanäle (4) gebildet werden,
    b) der Stapel (1, 9) in eine Form (12) eingebracht und in dieser von einer Umschlingungsvorrichtung (15), die um eine zentrale Achse (17) verschwenkbar ist und die wenigstens zwei Wikkeldorne (20, 21) aufweist, die im wesentlichen parallel zur Wikkelachse (17) verlaufen und sich in Längsrichtung der Kanäle (4) erstrecken und in einem Zentralbereich (18) des Stapels (1) jeweils an einer Außenfläche angreifen sowie mit Positionierelementen (22), die wenigstens teilweise in Kanäle (4) eingreifen, in dem Zentralbereich (18) des Stapels (1, 9) gehalten wird,
    c) der Stapel (1, 9) einem Umschlingungsvorgang unterzogen wird bis ein vorgegebener Umschlingungsgrad des Stapels (1, 9) erreicht ist.
    d) der Stapel (1, 9) im umschlungenen Zustand aus der Form (12) entnommen wird,
    e) die Verfahrensschritte a) bis d) für jeden Stapel (1, 9) eines weiteren Wabenkörpers wiederholt werden, und jeder Stapel (1, 9) mit in einem Zentralbereich (18) stets gleichem Aufbau, der relativ zueinander angeordnete Strukturen (7, 8) der Bleche (2) aufweist, gebildet wird, und wenigstens während des Umschlingungsvorgangs der Aufbau der relativ zueinander angeordnete Strukturen (7, 8) der Bleche (2) eines jeden Stapels (1, 9) erhalten bleibt.

3.  Verfahren nach Anspruch 1 oder 2, bei dem der Aufbau im Zentralbereich (18) eines Stapels (1, 9) für den Wabenkörper oder für einen ersten mehrerer Wabenkörper vorgegeben wird.

4.  Verfahren nach Anspruch 2, bei dem ein Stapel (1, 9) für einen ersten Wabenkörper geschichtet und der Aufbau im Zentralbereich (18) des Stapels (1, 9) für den ersten Wabenkörper bestimmt wird, wobei dieser Aufbau durch entsprechende Schichtung weiterer Bleche zu jeweils einem Stapel (1, 9) für jeden weiteren Wabenkörper wiederholt wird, wenn der aus dem ersten Stapel (1, 9) hergestellte Wabenkörper vorgegebene Qualitätskriterien erfüllt.

5. Verfahren nach Anspruch 1, 2 oder 3, bei dem strukturierte Bleche (2) mit Wellenbergen (7) und Wellentälern (8) und glatte Bleche (3) abwechselnd so zu einem Stapel (9) geschichtet werden, daß ein Wellenberg (7) eines strukturierten Blechs (2) im wesentlichen zwischen zwei Wellentälern (8) eines benachbarten strukturierten Blechs (2) liegt.

6. Verfahren nach Anspruch 5, bei dem die strukturierten Bleche (2) sich mit einer Wellenlänge ($\lambda$) wiederholende Wellenberge (7) und Wellentäler (8) aufweisen und die Bleche (2) vor der Stapelung von einem Blechband mit einer Länge (L), die einem ganzzahligen Vielfachen der Wellenlänge ($\lambda$) entspricht, abgetrennt werden.

7. Verfahren nach Anspruch 1, 2 oder 3, bei dem strukturierte Bleche (2) mit Wellenbergen (7) und Wellentälern (8) und glatte Bleche (3) abwechselnd so geschichtet werden, daß Wellenberge (7) und Wellentäler (8) benachbarter strukturierter Bleche (2) im wesentlichen miteinander fluchten.

8. Verfahren nach Anspruch 7, bei dem die strukturierte Bleche (2) sich mit einer Wellenlänge ($\lambda$) wiederholende Wellenberge (7) und Wellentäler (8) aufweisen und die Bleche (2) vor der Stapelung von einem Blechband (5) mit einer Länge (L) entsprechend der Beziehung

$$L = n\lambda + 0.5\,\lambda$$

abgetrennt werden, wobei n ein Element aus der Menge der natürlichen Zahlen ist.

9. Vorrichtung zur Herstellung wenigstens eines Wabenkörpers, insbesondere eines Katalysator-Trägerkörpers, aus wenigstens einem Stapel (1, 9) aus einer Vielzahl von zumindest teilweise strukturierten Blechen (2), die eine Vielzahl von für ein Fluid durchlässigen Kanälen (4) bilden, wobei die Vorrichtung eine Form (12), deren Innengestalt im wesentlichen einer Außenform eines herzustellenden Wabenkörpers entspricht, und eine Umschlingungsvorrichtung (15), durch die ein jeder Stapel (1, 9) in seinem Zentralbereich (18) wenigstens während eines Umschlingungsvorgang gehaltert wird und die um eine Achse (17) verschwenkbar ist, aufweist, **dadurch gekennzeichnet, daß** die Halteeinrichtung (23) Positionierelemente (22) aufweist, die wenigstens teilweise in die Kanäle (4) des Aufbaus in einem Zentralbereich (18) eines jeden Stapels (1, 9) einführbar sind, so daß wenigstens während des Umschlingungsvorgangs ein in einem Zentralbereich (18) ausgebildeter Aufbau des Stapels (1, 9) erhalten bleibt.

10. Vorrichtung nach Anspruch 10, **dadurch gekennzeichnet, daß** die Positionierelemente (22) dornartig ausgebildet sind.

**Claims**

1. A process for the production of a honeycomb body comprising a plurality of passages (4) through which a fluid can pass from a plurality of at least partially structured metal sheets (2), in which

   a) at least one stack (1) is so piled up from a plurality of at least partially structured metal sheets (2) that the passages (4) are formed,
   b) the stack (1, 9) is introduced into a mould (12) and held therein by a wrapping device (15) which is pivotable about a central axis (17) and which has at least two winding bars (20, 21) which extend substantially parallel to the winding axis (17) and which extend in the longitudinal direction of the passages (4) and which in a central region (18) of the stack (1) respectively engage an outside surface and with positioning elements (22) which at least partially engage into passages (4), in the central region (18) of the stack (1, 9), and
   c) the stack (1, 9) is subjected to a wrapping procedure until a predetermined degree of wrapping of the stack (1, 9) is reached, and at least during the wrapping procedure a constitution formed in a central region (18) with structures (7, 8) of the metal sheets (2), which structures are arranged relative to each other, is maintained.

2. A process for the production of honeycomb bodies, wherein each honeycomb body has a plurality of passages through which a fluid can pass from a plurality of at least partially structured metal sheets (2), in which

   a) at least one stack (1, 9) is so piled up from a plurality of at least partially structured metal sheets (2) that the passages (4) are formed,
   b) the stack (1, 9) is introduced into a mould (12) and held therein by a wrapping device (15) which is pivotable about a central axis (17) and which has at least two winding bars (20, 21) which extend substantially parallel to the winding axis (17) and which extend in the longitudinal direction of the passages (4) and which in a central region (18) of the stack (1) respectively engage an outside surface and with positioning elements (22) which at least partially engage into passages (4), in the central region (18) of the stack (1, 9), and

c) the stack (1, 9) is subjected to a wrapping procedure until a predetermined degree of wrapping of the stack (1, 9) is reached,

d) the stack (1, 9) is removed in the wrapped condition from the mould (12), and

e) process steps a) to d) are repeated for each stack (1, 9) of a further honeycomb body, and each stack (1, 9) is formed with a constitution which is always the same in a central region (18) and which has structures (7, 8) of the metal sheets (2), which structures are arranged relative to each other, and at least during the wrapping operation the constitution of the structures (7, 8) of the metal sheets (2) of each stack (1, 9), which structures are arranged relative to each other, is maintained.

3. A process according to claim 1 or claim 2 in which the constitution in the central region (18) of a stack (1) for the honeycomb body or for a first of a plurality of honeycomb bodies is predetermined.

4. A process according to claim 2 in which a stack (1, 9) is piled up for a first honeycomb body and the constitution in the central region (18) of the stack (1, 9) is determined for the first honeycomb body, wherein said constitution is repeated by suitable piling of further metal sheets to form a respective stack (1, 9) for each further honeycomb body when the honeycomb body produced from the first stack (1, 9) satisfies predetermined quality criteria.

5. A process according to claim 1, claim 2 or claim 3 in which structured metal sheets (2) with corrugation crests (7) and corrugation troughs (8) and smooth sheets (3) are so piled up alternately to form a stack (9) that a corrugation crest (7) of a structured metal sheet (2) is substantially between two corrugation troughs (8) of an adjacent structured metal sheet (2).

6. A process according to claim 5 in which the structured metal sheets (2) have corrugation crests (7) and corrugation troughs (8) which are repeated at a corrugation length ($\lambda$) and prior to the stacking operation the metal sheets (2) are cut off a sheet metal strip with a length (L) which corresponds to an integral multiple of the corrugation length ($\lambda$).

7. A process according to claim 1, claim 2 or claim 3 in which structured metal sheets (2) with corrugation crests (7) and corrugation troughs (8) and smooth sheets (3) are so piled up alternately to form a stack (9) that corrugation crests (7) and corrugation troughs (8) of adjacent structured metal sheets (2) are substantially aligned with each other.

8. A process according to claim 7 in which the structured metal sheets (2) have corrugation crests (7) and corrugation troughs (8) which are repeated at a corrugation length ($\lambda$) and prior to the stacking operation the metal sheets (2) are cut off a sheet metal strip (5) with a length (L) corresponding to the relationship:

$$L = n\lambda + 0.5\lambda,$$

wherein n is an element from the set of natural numbers.

9. Apparatus for producing at least one honeycomb body, in particular a catalytic converter carrier body, from at least one stack (1, 9) comprising a plurality of at least partially structured metal sheets (2) which form a plurality of passages (4) through which a fluid can flow, wherein the apparatus includes a mould (12) whose internal configuration substantially corresponds to an external shape of a honeycomb body to be produced, and a wrapping device (15) by which each stack (1, 9) is held in its central region (18) at least during a wrapping procedure and which is pivotable about an axis (17), **characterised in that** the holding device (23) has positioning elements (22) which can be at least partially introduced into the passages (4) of the constitution in a central region (18) of each stack (1, 9) so that at least during the wrapping procedure a constitution of the stack (1, 9), which is formed in a central region (18), is maintained.

10. Apparatus according to claim 10 **characterised in that** the positioning elements (22) are of a bar-like nature.

**Revendications**

1. Procédé destiné à la fabrication d'un corps alvéolaire avec une multiplicité de canaux (4) pouvant être traversés par un fluide à partir d'une multiplicité de tôles au moins partiellement structurées (2), dans le cas duquel

   a) au moins une pile (1) est empilée de telle manière à partir d'une pluralité de tôles au moins partiellement structurées (2) que les canaux (4) se forment,

   b) la pile (1, 9) est introduite dans un moule (12) et y est maintenue dans la zone centrale (18) de la pile (1, 9) par un dispositif d'enroulement (15) pouvant pivoter autour d'un axe central (17) et présentant au moins deux mandrins de bobinage (20, 21) qui s'étendent sensiblement de façon parallèle à l'axe d'enroulement (17) et s'étendent en direction longitudinale des canaux (4) et qui dans une zone centrale (18) de la pile (1) attaquent respectivement au niveau d'une surface extérieure, ainsi que par des éléments de positionnement (22) qui s'engagent au moins partiellement dans des canaux (4),

c) la pile (1, 9) est soumise à un processus d'enlacement jusqu'à ce qu'un degré d'enroulement prédéterminé de la pile (1, 9) soit atteint et qu'au moins durant le processus d'enlacement une construction formée dans une zone centrale (18) et ayant des structures (7, 8) des tôles (2) se trouvant relativement par rapport aux autres soit maintenue.

2. Procédé destiné à la fabrication de corps alvéolaires, chaque corps alvéolaire présentant une multiplicité de canaux pouvant être traversés par un fluide d'une multiplicité de tôles au moins partiellement structurées (2), dans le cas duquel

a) au moins une pile (1, 9) est empilée à partir d'une pluralité de tôles au moins partiellement structurées (2) d'une telle manière que les canaux (4) se forment,

b) la pile (1, 9) est introduite dans un moule (12) et y est maintenue dans la zone centrale (18) de la pile (1, 9) par un dispositif d'enroulement (15) pouvant pivoter autour d'un axe central (17) et présentant au moins deux mandrins de bobinage (20, 21) qui s'étendent sensiblement de façon parallèle à l'axe d'enroulement (17) et s'étendent en direction longitudinale des canaux (4) et qui dans une zone centrale (18) de la pile (1) attaquent respectivement au niveau d'une surface extérieure, ainsi que par des éléments de positionnement (22) qui s'engagent au moins partiellement dans des canaux (4),

c) la pile (1, 9) est soumise à un processus d'enlacement jusqu'à ce qu'un degré d'enroulement prédéterminé de la pile (1, 9) soit atteint,

d) la pile (1, 9) est prélevée de la forme (12) en état enlacé,

e) les étapes de procédé a) à d) sont répétées pour chaque pile (1, 9) d'un autre corps alvéolaire et chaque pile (1, 9) est formée avec une construction étant toujours identique dans une zone centrale (18), la construction présentant des structures (7, 8) des tôles (2) agencées les unes relativement aux autres, et au moins durant le processus d'enlacement la construction des structures (7, 8) agencées les unes relativement aux autres des tôles (2) de chaque pile (1, 9) est maintenue.

3. Procédé selon la revendication 1 ou 2, dans le cas duquel la construction dans la zone centrale (18) d'une pile (1, 9) pour le corps alvéolaire ou pour un premier de plusieurs corps alvéolaires est prédéterminée.

4. Procédé selon la revendication 2, dans le cas duquel une pile (1, 9) pour un premier corps alvéolaire est empilée et la construction dans la zone centrale (18) de la pile (1, 9) est déterminée pour le premier corps alvéolaire, cette construction étant répétée pour chaque autre corps alvéolaire par un empilage respectif d'autres tôles en respectivement une pile (1, 9) si le corps alvéolaire fabriqué à partir de la première pile (1, 9) satisfait aux critères de qualité prédéterminés.

5. Procédé selon la revendication 1, 2 ou 3, dans le cas duquel des tôles structurées (2) avec des crêtes (7) d'ondes et des creux (8) d'ondes et des tôles lisses (3) sont empilées en alternance en une pile (9) de façon telle qu'une crête (7) d'onde d'une tôle structurée (2) se trouve sensiblement entre deux creux (8) d'ondes d'une tôle structurée (2) adjacente.

6. Procédé selon la revendication 5, dans le cas duquel les tôles structurées (2) présentent des crêtes (7) d'ondes et des creux (8) d'ondes se répétant avec une longueur d'onde ($\lambda$) et avant l'empilage les tôles (2) sont détachées d'un ruban de tôle ayant une longueur (L), correspondant à un multiple entier de la longueur d'onde ($\lambda$).

7. Procédé selon la revendication 1, 2 ou 3, dans le cas duquel des tôles structurées (2) avec des crêtes (7) d'ondes et des creux (8) d'ondes et des tôles lisses (3) sont empilées en alternance de façon telle que des crêtes (7) d'ondes et des creux (8) d'ondes de tôles structurées (2) adjacentes sont sensiblement alignés.

8. Procédé selon la revendication 7, dans le cas duquel les tôles structurées (2) présentent des crêtes (7) d'ondes et des creux (8) d'ondes se répétant avec une longueur d'onde ($\lambda$) et avant l'empilage les tôles (2) sont détachées d'un ruban de tôle (5) ayant une longueur (L) selon la relation

$$L = n\lambda + 0,5\lambda,$$

n étant un élément de l'ensemble des entiers naturels.

9.  Dispositif destiné à la fabrication d'au moins un corps alvéolaire, notamment d'un corps support de catalyseur, à partir d'au moins une pile (1, 9) d'une multiplicité de tôles au moins partiellement structurées (2) qui forment une multiplicité de canaux (4) pouvant être traversés par un fluide, le dispositif présentant un moule (12) dont la configuration intérieure correspond sensiblement à la forme extérieure d'un corps alvéolaire devant être fabriqué, et un dispositif d'enroulement (15) au moyen duquel durant au moins un processus d'enlacement chaque pile (1, 9) est maintenue dans sa zone centrale (18) et qui peut pivoter autour d'un axe (17), **caractérisé en ce que** le moyen de maintien (23) présente des éléments de positionnement (22) qui peuvent au moins partiellement être introduits dans les canaux (4) de la construction dans une zone centrale (18) de chaque pile (1, 9), de sorte qu'au moins durant le processus d'enlacement une construction de la pile (1, 9) formée dans la zone centrale (18) soit maintenue.

10. Dispositif selon la revendication 10, **caractérisé en ce que** les éléments de positionnement (22) sont conçus en forme de mandrins.

FIG.1

FIG.2

FIG.3

FIG.4

FIG.5

FIG.6